# EUROPEAN PATENT SPECIFICATION

(11) **EP 4 636 472 B1**
(45) Date of publication and mention of the grant of the patent: **28.10.2026**
(21) Application number: 24202100.4
(22) Date of filing: 24.09.2024
(51) Int. Cl.: G02F 1/313

(54) **MODULATORS BASED ON CASCADED MACH-ZEHNDER INTERFEROMETERS**
MODULATOREN BASIEREND AUF KASKADIERTEN MACH-ZEHNDER-INTERFEROMETERN
MODULATEURS BASÉS SUR DES INTERFÉROMÈTRES MACH-ZEHNDER EN CASCADE

(30) Priority: 18.04.2024 US 202418638813
(43) Date of publication of application: 22.10.2025
(73) Proprietor: GlobalFoundries U.S. Inc., Malta, NY 12020 (US)
(72) Inventor: CHANDRAN, Sujith, Malta, NY 12020 (US); BIAN, Yusheng, Malta, NY 12020 (US); LEE, Won Suk, Malta, NY 12020 (US); ABOKETAF, Abdelsalam, Essex Junction, VT 05452 (US)
(74) Representative: Lambacher, Michael

(56) References cited:
- US-A1- 2005 058 398
- US-A1- 2008 239 465
- US-A1- 2009 074 421
- US-A1- 2009 074 426
- US-A1- 2019 219 890

## Description

### BACKGROUND

The disclosure relates to photonic chips and, more specifically, to structures for a modulator and methods of forming a structure for a modulator.

Photonic chips are used in many applications and systems including, but not limited to, data communication systems and data computation systems. A photonic chip includes a photonic integrated circuit comprised of optical components, such as modulators, polarizers, and optical couplers, that are used to manipulate light received from a light source, such as a laser or an optical fiber.

A Mach-Zehnder modulator is a common photonic component that may be found in a photonic integrated circuit. A directional coupler splits input light between a pair of arms of the Mach-Zehnder modulator. A phase difference may be introduced between the light propagating in the different arms to provide intensity modulation and different switched conditions. The arms converge at a downstream optical coupler that recombines the light after the introduction of the phase difference. In one switched condition, the phase difference between the light after propagating through the arms is an odd multiple of pi, and the combined light exits from an output port of the optical coupler. In the other switched condition, the phase difference between the light after propagating through the arms is an even multiple of pi, and the combined light exits from a different output port of the optical coupler.
US 2009/074426 A1 describes a Mach-Zehnder delay interferometer comprising a pair of unequal-length waveguide arms connected at their respective ends by waveguide couplers. Each of the unequal-length waveguide arms includes a phase shifter.
US 2008/239465 A1 describes a demodulator structure comprising two Mach-Zehnder interferometers. Each Mach-Zehnder interferometer comprises two waveguides of different length and thin-film heaters for phase adjustment.
US 2005/058398 A1 describes a cascaded Mach-Zehnder interferometer arrangement.

Improved structures for a modulator and methods of forming a structure for a modulator are needed.

### SUMMARY

In an embodiment of the invention, a structure for a modulator is provided. The structure comprises a first waveguide core including a first delay section, and a second waveguide core including a first delay section and a second delay section. The first delay section of the second waveguide core has a shorter length than the first delay section of the first waveguide core, and the second delay section of the second waveguide core has a longer length than the first delay section of the second waveguide core. The structure further comprises a first optical phase shifter including a first p-n junction in a first portion of the first delay section of the first waveguide core, and a first optical phase shifter including a first p-n junction in a first portion of the second delay section of the second waveguide core.
The structure may further comprise a second optical phase shifter including a second p-n junction in a second portion of the second delay section of the second waveguide core The first delay section of the first waveguide core and the second delay section of the second waveguide core may have equal lengths.
The structure may further comprise a directional coupler between the first delay section of the second waveguide core and the second delay section of the second waveguide core.
Further, the structure may further comprise a second optical phase shifter including a second p-n junction in a second portion of the first delay section of the first waveguide core. Further, the first p-n junction may be spaced along a physical length of the first delay section of the first waveguide core from the second p-n junction.
Further, the first delay section of the first waveguide core may include a bend between the first portion of the first delay section of the first waveguide core and the second portion of the first delay section of the first waveguide core. Alternatively, the first delay section of the first waveguide core may include a bend between the first p-n junction and the second p-n junction. According to one variant, the bend may be semi-circular.
Further, the first delay section of the first waveguide core may include a third portion between the first portion and the second portion; the third portion of the first delay section of the first waveguide core may lack a p-n junction.
Further, the first waveguide core may include a second delay section, and the structure may further comprise a first directional coupler between the first delay section of the first waveguide core and the second delay section of the first waveguide core. Further, the structure may further comprise a second directional coupler, wherein the second delay section of the first waveguide core may be disposed between the first directional coupler and the second directional coupler. Still further, the second delay section of the first waveguide core may have a shorter length than the first delay section of the first waveguide core.
Further, the structure may further comprise a second optical phase shifter including a second p-n junction in a second portion of the second delay section of the first waveguide core.
Further, the structure may further comprise a first directional coupler, and a second directional coupler, wherein the first delay section of the first waveguide core and the first delay section of the second waveguide core may be disposed between the first directional coupler and the second directional coupler.
Still further, the first waveguide core and the second waveguide core may comprise silicon.

In an embodiment of the invention, a method of forming a structure for a modulator is provided. The method comprises forming a first waveguide core including a delay section, and forming a second waveguide core including a first delay section and a second delay section. The first delay section of the second waveguide core has a shorter length than the delay section of the first waveguide core, and the second delay section of the second waveguide core has a longer length than the first delay section of the second waveguide core. The method further comprises forming an optical phase shifter including a p-n junction in a portion of the delay section of the first waveguide core, and forming an optical phase shifter including a p-n junction in a portion of the second delay section of the second waveguide core.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure for a modulator at an initial fabrication stage of a processing method in accordance with embodiments of the invention.
FIG. 2 is a cross-sectional view taken generally along line 2-2 in FIG. 1.
FIG. 2A is a cross-sectional view taken generally along line 2A-2A in FIG. 1.
FIG. 2B is a cross-sectional view taken generally along line 2B-2B in FIG. 1.
FIGS. 3, 3A, 3B are cross-sectional views of the structure at a fabrication stage of the processing method subsequent to FIGS. 1, 2, 2A, 2B.

### DETAILED DESCRIPTION

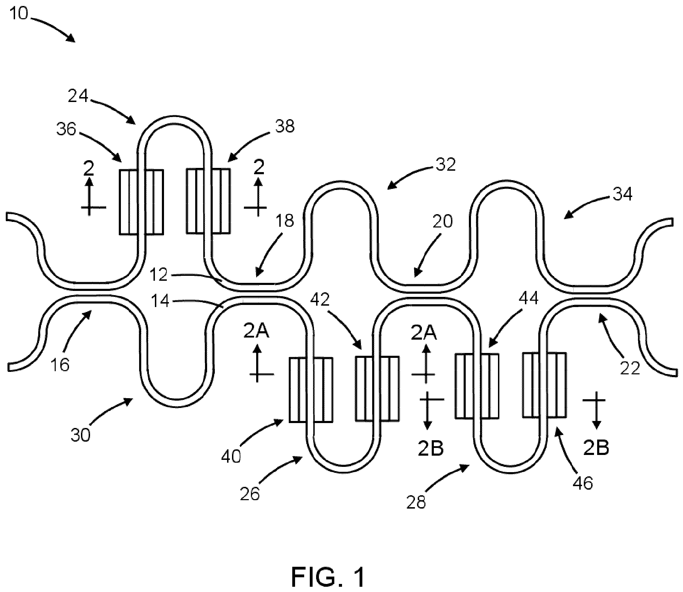

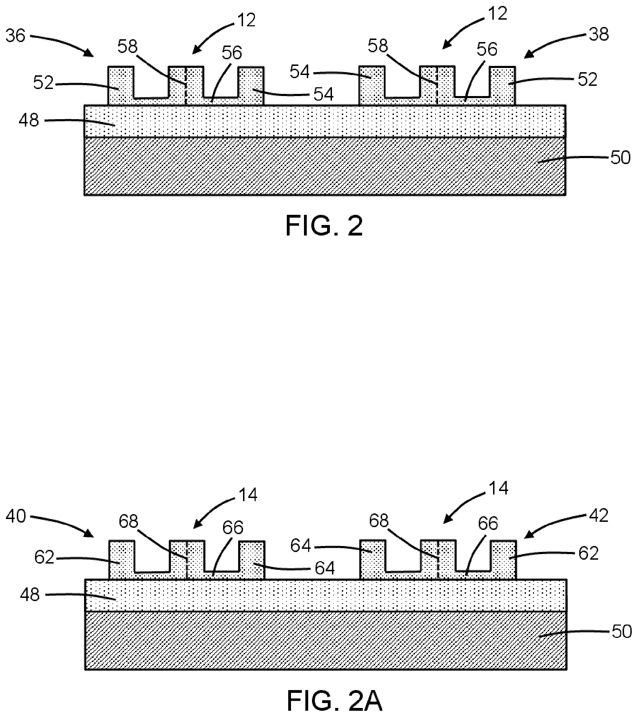

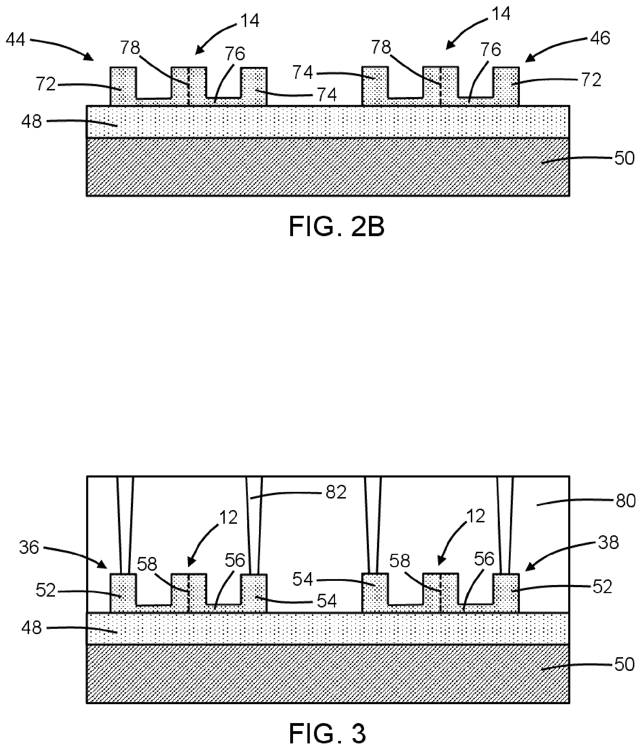

With reference to FIGS. 1, 2, 2A, 2B and in accordance with embodiments of the invention, a structure 10 for a modulator includes a waveguide core 12 and a waveguide core 14 that define arms. The waveguide cores 12, 14 are routed on the photonic chip to include adjacent sections that define directional couplers 16, 18, 20, 22. Each of the directional couplers 16, 18, 20, 22 may be characterized by a splitting ratio, and the splitting ratio may differ among the directional couplers 16, 18, 20, 22. The waveguide core 12 includes an active delay section 24 arranged between the directional coupler 16 and the directional coupler 18 along the length of the waveguide core 12. The waveguide core 14 includes an active delay section 26 arranged between the directional coupler 18 and the directional coupler 20 along the length of the waveguide core 14, and an active delay section 28 arranged between the directional coupler 20 and the directional coupler 22 along the length of the waveguide core 14. The waveguide core 12 further includes a passive delay section 30 arranged between the directional coupler 18 and the directional coupler 20 along the length of the waveguide core 12, and a passive delay section 32 arranged between the directional coupler 20 and the directional coupler 22 along the length of the waveguide core 12. The waveguide core 14 further includes a passive delay section 34 arranged between the directional coupler 16 and the directional coupler 18 along the length of the waveguide core 14.

The active delay sections 24, 26, 28 have a greater physical length than the passive delay sections 30, 32, 34. The active delay section 24 of the waveguide core 12 is paired with the passive delay section 30 of the waveguide core 14 to define a Mach-Zehnder interference filter of the modulator, the active delay section 26 of the waveguide core 14 is paired with the passive delay section 32 of the waveguide core 12 to define a Mach-Zehnder interference filter of the modulator, and the active delay section 28 of the waveguide core 14 is paired with the passive delay section 34 of the waveguide core 12 to define a Mach-Zehnder interference filter of the modulator. **In** alternative embodiments, additional cascaded Mach-Zehnder interference filters may be added to the modulator embodied in the structure 10.

The active delay section 24 and the passive delay section 30 are spaced apart with a separation that minimizes light coupling. The active delay section 26 and the passive delay section 32 are spaced apart with a separation that minimizes light coupling. The active delay section 28 and the passive delay section 34 are spaced apart with a separation that minimizes light coupling. The active delay section 24 of the waveguide core 12 may include a semi-circular bend that enables connections between the active delay section 24 and the different directional couplers 16, 18. The active delay section 26 of the waveguide core 14 may include a semi-circular bend that enables connections between the active delay section 26 and the different directional couplers 18, 20. The active delay section 28 of the waveguide core 14 may include a semi-circular bend that enables connections between the active delay section 28 and the different directional couplers 20, 22. The passive delay sections 30, 32, 34 also include respective semi-circular bends to facilitate connections to the directional couplers 16, 18, 20, 22. **In** alternative embodiments, the active delay sections 24, 26, 28 may include an S-bend or a Bezier curve instead of a semi-circular bend. In alternative embodiments, the passive delay sections 30, 32, 34 may include an S-bend or a Bezier curve instead of a semi-circular bend.

Optical phase shifters 36, 38 are associated with different portions of the active delay section 24 of the waveguide core 12. The optical phase shifter 36 is spaced from the optical phase shifter 38 along the length of the active delay section 24 and is disposed closer to the directional coupler 16 than the optical phase shifter 38. Optical phase shifters 40, 42 are associated with different portions of the active delay section 26 of the waveguide core 14. The optical phase shifter 40 is spaced from the optical phase shifter 42 along the length of the active delay section 26 and is disposed along the length of the active delay section 26 closer to the directional coupler 18 than the optical phase shifter 42. Optical phase shifters 44, 46 are associated with different portions of the active delay section 28 of the waveguide core 14. The optical phase shifter 44 is spaced from the optical phase shifter 46 along the length of the active delay section 28 and is disposed along the length of the active delay section 28 closer to the directional coupler 20 than the optical phase shifter 46.

The waveguide cores 12, 14 and the optical phase shifters 36, 38, 40, 42, 44, 46 are positioned on, and over, a dielectric layer 48 and a semiconductor substrate 50 of a photonic chip. In an embodiment, the dielectric layer 48 may be comprised of a dielectric material, such as silicon dioxide, and the semiconductor substrate 50 may be comprised of a semiconductor material, such as single-crystal silicon. In an embodiment, the dielectric layer 48 may be a buried oxide layer of a silicon-on-insulator substrate.

In an embodiment, the waveguide cores 12, 14 and the optical phase shifters 36, 38, 40, 42, 44, 46 may be comprised of a semiconductor material, such as single-crystal silicon. In an embodiment, the waveguide cores 12, 14 and the optical phase shifters 36, 38, 40, 42, 44, 46 may be formed by patterning the semiconductor material (e.g., single-crystal silicon) of a device layer of a silicon-on-insulator substrate with lithography and etching processes. In an alternative embodiment, the waveguide cores 12, 14 and the optical phase shifters 36, 38, 40, 42, 44, 46 may be comprised of a different material, such as polysilicon, lithium niobate, a III-V compound semiconductor material, or barium titanate.

As best shown in FIG. 2, the optical phase shifter 36 includes a raised contact landing region 52, a raised contact landing region 54, and a slab layer 56 that physically connects the raised contact landing regions 52, 54 to different portions of the active delay section 24 of the waveguide core 12. The optical phase shifter 38, which has a similar or identical construction to the optical phase shifter 36, also includes a raised contact landing region 52, a raised contact landing region 54, and a slab layer 56 that physically connects the raised contact landing regions 52, 54 to opposite sides of a different portion of the active delay section 24 of the waveguide core 12 from the optical phase shifter 36. The portion of the active delay section 24 of the waveguide core 12 participating in the optical phase shifter 36 may be spaced along the length of the active delay section 24 from the portion of the active delay section 24 of the waveguide core 12 participating in the optical phase shifter 38. In an embodiment, the portion of the active delay section 24 of the waveguide core 12 participating in the optical phase shifter 36 may be disposed between the bend of the active delay section 24 and the directional coupler 16, and the portion of the active delay section 24 of the waveguide core 12 participating in the optical phase shifter 38 may be disposed between the bend of the active delay section 24 and the directional coupler 18.

The slab layer 56 may have a thickness that is less than the thickness of the active delay section 24 of the waveguide core 12 and the raised contact landing regions 52, 54. For each of the optical phase shifters 36, 38, the raised contact landing region 52, a portion of the waveguide core 12 adjacent to the raised contact landing region 52, and the slab layer 56 therebetween may be doped with a conductivity type, such as being doped with a p-type dopant to provide p-type conductivity. For each of the optical phase shifters 36, 38, the raised contact landing region 54, a portion of the waveguide core 12 adjacent to the raised contact landing region 54, and the slab layer 56 therebetween may be doped with a conductivity type, such as being doped with a n-type dopant to provide n-type conductivity.

The optical phase shifters 36, 38 include p-n junctions 58 inside portions of the active delay section 24 of the waveguide core 12 representing boundaries across which the conductivity type changes. The portions of the active delay section 24 including the p-n junctions 58 are distributed and spaced along the length of the active delay section 24 of the waveguide core 12. One of the p-n junctions 58 may extend over the full length of the optical phase shifter 36, and the other of the p-n junctions 58 may extend over the full length of the optical phase shifter 38. In the representative embodiment, the p-n junctions 58 may have a doping profile characterized as horizontal p-n junctions. In alternative embodiments, the p-n junctions 58 inside the active delay section 24 of the waveguide core 12 may have various different doping profiles, such as a vertical doping profile, a lateral doping profile, an S-type doping profile, a Z-type doping profile, or an interdigitated doping profile. A portion of the active delay section 24, which may include the semi-circular bend, between the portions of the active delay section 24 participating in the optical phase shifters 36, 38 may lack a p-n junction such that the p-n junctions 58 are segmented and discontinuous.

As best shown in FIG. 2A, the optical phase shifter 40 includes a raised contact landing region 62, a raised contact landing region 64, and a slab layer 66 that physically connects the raised contact landing regions 62 to different portions of the active delay section 26 of the waveguide core 14. The optical phase shifter 42, which has a similar or identical construction to the optical phase shifter 40, also includes the raised contact landing region 62, the raised contact landing region 64, and the slab layer 66 that physically connects the raised contact landing regions 62, 64 to opposite sides of a different portion of the active delay section 26 of the waveguide core 14 from the optical phase shifter 40. The portion of the active delay section 26 of the waveguide core 14 participating in the optical phase shifter 40 may be spaced along the length of the active delay section 26 from the portion of the active delay section 26 of the waveguide core 14 participating in the optical phase shifter 42. In an embodiment, the portion of the active delay section 26 of the waveguide core 14 participating in the optical phase shifter 40 may be disposed between the bend of the active delay section 26 and the directional coupler 18, and the portion of the active delay section 26 of the waveguide core 14 participating in the optical phase shifter 42 may be disposed between the bend of the active delay section 26 and the directional coupler 20.

The slab layer 66 may have a thickness that is less than the thickness of the active delay section 26 of the waveguide core 14 and the raised contact landing regions 62, 64. For each of the optical phase shifters 40, 42, the raised contact landing region 62, a portion of the waveguide core 14 adjacent to the raised contact landing region 62, and the slab layer 66 therebetween may be doped with a conductivity type, such as being doped with a p-type dopant to provide p-type conductivity. For each of the optical phase shifters 40, 42, the raised contact landing region 64, a portion of the waveguide core 14 adjacent to the raised contact landing region 64, and the slab layer 66 therebetween may be doped with a conductivity type, such as being doped with a n-type dopant to provide n-type conductivity.

The optical phase shifters 40, 42 include p-n junctions 68 inside portions of the active delay section 26 of the waveguide core 14 representing boundaries across which the conductivity type changes. The portions of the active delay section 26 including the p-n junctions 68 are distributed and spaced along the length of the active delay section 26 of the waveguide core 14. One of the p-n junctions 68 may extend over the full length of the optical phase shifter 40, and the other of the p-n junctions 68 may extend over the full length of the optical phase shifter 42. In the representative embodiment, the p-n junctions 68 may have a doping profile characterized as horizontal p-n junctions. In alternative embodiments, the p-n junctions 68 inside the active delay section 26 of the waveguide core 14 may have various different doping profiles, such as a vertical doping profile, a lateral doping profile, an S-type doping profile, a Z-type doping profile, or an interdigitated doping profile. A portion of the active delay section 26, which may include the semi-circular bend, between the portions of the active delay section 26 participating in the optical phase shifters 40, 42 may lack a p-n junction such that the p-n junctions 68 are segmented and discontinuous.

As best shown in FIG. 2B, the optical phase shifter 44 includes a raised contact landing region 72, a raised contact landing region 74, and a slab layer 76 that physically connects the raised contact landing regions 72 to different portions of the active delay section 28 of the waveguide core 14. The optical phase shifter 46, which has a similar or identical construction to the optical phase shifter 44, also includes the raised contact landing region 72, the raised contact landing region 74, and the slab layer 76 that physically connects the raised contact landing regions 72, 74 to opposite sides of a different portion of the active delay section 28 of the waveguide core 14 from the optical phase shifter 44. The portion of the active delay section 28 of the waveguide core 14 participating in the optical phase shifter 44 may be spaced along the length of the active delay section 28 from the portion of the active delay section 28 of the waveguide core 14 participating in the optical phase shifter 46. In an embodiment, the portion of the active delay section 28 of the waveguide core 14 participating in the optical phase shifter 44 may be disposed between the bend of the active delay section 28 and the directional coupler 20, and the portion of the active delay section 28 of the waveguide core 14 participating in the optical phase shifter 46 may be disposed between the bend of the active delay section 28 and the directional coupler 22.

The slab layer 76 may have a thickness that is less than the thickness of the active delay section 28 of the waveguide core 14 and the raised contact landing regions 72, 74. For each of the optical phase shifters 44, 46, the raised contact landing region 72, a portion of the waveguide core 14 adjacent to the raised contact landing region 72, and the slab layer 76 therebetween may be doped with a conductivity type, such as being doped with a p-type dopant to provide p-type conductivity. For each of the optical phase shifters 44, 46, the raised contact landing region 74, a portion of the waveguide core 14 adjacent to the raised contact landing region 74, and the slab layer 76 therebetween may be doped with a conductivity type, such as being doped with a n-type dopant to provide n-type conductivity.

The optical phase shifters 44, 46 include p-n junctions 78 inside portions of the active delay section 28 of the waveguide core 14 representing boundaries across which the conductivity type changes. The portions of the active delay section 28 including the p-n junctions 78 are distributed and spaced along the length of the active delay section 28 of the waveguide core 14. One of the p-n junctions 78 may extend over the full length of the optical phase shifter 44, and the other of the p-n junctions 78 may extend over the full length of the optical phase shifter 46. In the representative embodiment, the p-n junctions 78 may have a doping profile characterized as horizontal p-n junctions. In alternative embodiments, the p-n junctions 78 inside the active delay section 28 of the waveguide core 14 may have various different doping profile, such as a vertical doping profile, a lateral doping profile, an S-type doping profile, a Z-type doping profile, or an interdigitated doping profile. A portion of the active delay section 28, which may include the semi-circular bend, between the portions of the active delay section 28 participating in the optical phase shifters 44, 46 may lack a p-n junction such that the p-n junctions 78 are segmented and discontinuous.

The passive delay section 30 of the waveguide core 12, the passive delay section 32 of the waveguide core 14, and the passive delay section 34 of the waveguide core 14 lack optical phase shifters and, in particular, lack the p-n junctions characteristic of an optical phase shifter. Instead, the passive delay section 30, 32, 34 are shorter in physical length than the active delay sections 24, 26, 28.

In an alternative embodiment, one or both of the optical phase shifters 36, 38 may extend into the semi-circular bend of the active delay section 24, one or both of the optical phase shifters 40, 42 may extend into the semi-circular bend of the active delay section 26, and one or both of the optical phase shifters 44, 46 may extend into the semi-circular bend of the active delay section 28. In an alternative embodiment, the optical phase shifters 36, 38 may extend into the semi-circular bend of the active delay section 24 and merge to define a unitary optical phase shifter, the optical phase shifters 40, 42 may extend into the semi-circular bend of the active delay section 26 and merge to define a unitary optical phase shifter, and the optical phase shifters 44, 46 may extend into the semi-circular bend of the active delay section 28 and merge to define a unitary optical phase shifter.

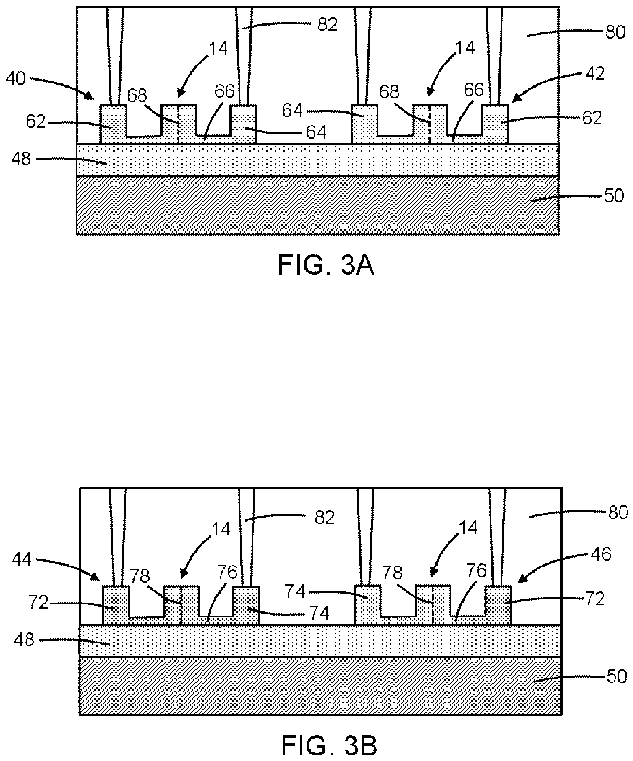

With reference to FIGS. 3, 3A, 3B in which like reference numerals refer to like features in FIGS. 1, 2, 2A, 2B and at a subsequent fabrication stage, a dielectric layer 80 is formed on, and over, the modulator embodied in the structure 10. The dielectric layer 80 may be comprised of a dielectric material, such as silicon dioxide, that is an electrical insulator and that has a refractive index less than the refractive index of the material constituting the waveguide cores 12, 14 and the optical phase shifters 36, 38, 40, 42, 44, 46. Contacts 82 are formed that are physically and electrically connected to the raised contact landing regions 52, 54 of each of the optical phase shifters 36, 38, 40, 42, 44, 46. The contacts 82 may be comprised of a metal, such as tungsten, that is formed in openings patterned in the dielectric layer 48. The contacts 82 may connect the optical phase shifters 36, 38, 40, 42, 44, 46 to a power source, such as a low-impedance power source that can be operated to drive the optical phase shifters 36, 38, 40, 42, 44, 46.

In use, light is input into the directional coupler 16 via either the waveguide core 12 or the waveguide core 14, and the directional coupler 16 splits the light between the waveguide core 12 and the waveguide core 14. A portion of the split light propagates in the active delay section 24 of the waveguide core 12 and another portion of the split light propagates the passive delay section 30 of the waveguide core 14. An electric field applied by the optical phase shifters 36, 38 can change the optical path length in the active delay section 24, which is additive to the longer physical length of the active delay section 24 in comparison to the passive delay section 30. The directional coupler 18 combines and splits the light between the waveguide core 12 and the waveguide core 14. A portion of the split light propagates in the active delay section 26 of the waveguide core 14 and another portion of the split light propagates the passive delay section 32 of the waveguide core 12. An electric field applied by the optical phase shifters 40, 42 can change the optical path length in the active delay section 26, which is additive to the longer physical length of the active delay section 26 in comparison to the passive delay section 32. The directional coupler 20 combines and splits the light between the waveguide core 12 and the waveguide core 14. A portion of the split light propagates in the active delay section 28 of the waveguide core 14 and another portion of the split light propagates the passive delay section 34 of the waveguide core 12. An electric field applied by the optical phase shifters 44, 46 can change the optical path length in the active delay section 28, which is additive to the longer physical length of the active delay section 28 in comparison to the passive delay section 34. The optical phase shifters 36, 38, 40, 42, 44, 46 may be driven by electrical signals to generate the electric fields. The change in the optical path lengths results in phase modulation. The arm combination with different phase modulation of the light converts the phase modulation into intensity modulation at the output from the modulator supplied by the directional coupler 20.

In comparison to conventional modulators, the modulator embodied in the cascaded Mach-Zehnder interference filters of the structure 10 may be characterized by an improved transmission penalty relating to the efficiency of translating input power into optical modulation amplitude. In comparison to conventional modulators, the modulator embodied in the cascaded Mach-Zehnder interference filters of the structure 10 may exhibit a reduced insertion loss while maintaining a high extinction ratio. The optical phase shifters 36, 38, 40, 42, 44, 46 incorporated into the active delay sections 24, 26, 28 enable a steep optical response for highly efficient intensity modulation that exceeds the optical response for cascaded passive Mach-Zehnder interference filters. The modulator embodied in the structure 10 is characterized by a lumped modulator structure, which has a smaller footprint than a Mach-Zehnder modulator having a traveling-wave structure but also has comparable bandwidth and a lower driving voltage. Such a lumped modulator may be characterized by an improved bandwidth compared to modulators lacking optical couplers, lack attenuation matching issues and impendence matching issues, exhibit greater robustness, and be characterized by an improved modulation efficiency in comparison with a traveling-wave Mach-Zehnder modulator.

In alternative embodiments, the structure 10 may adapted to other types of modulators, such as thermal-optic modulators, electrically-tunable modulators comprised of lithium niobate, and modulators constructed using other materials, such as III-V compound semiconductor materials, barium titanate, and graphene.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure for a modulator, the structure comprising:
a first waveguide core (12) including a first delay section (24);
a second waveguide core (14) including a first delay section (30) and a second delay section (26), the first delay section (30) of the second waveguide core (14) having a shorter length than the first delay section (24) of the first waveguide core (12), and the second delay section (26) of the second waveguide core (14) having a longer length than the first delay section (30) of the second waveguide core (14);
a first optical phase shifter (36) including a first p-n junction in a first portion of the first delay section (24) of the first waveguide core (12); and
a first optical phase shifter (40) including a first p-n junction in a first portion of the second delay section (26) of the second waveguide core (14).

2. The structure of claim 1 further comprising:
a second optical phase shifter (42) including a second p-n junction in a second portion of the second delay section (26) of the second waveguide core (14).

3. The structure of claim 1 or claim 2 further comprising:
a directional coupler (18) between the first delay section (30) of the second waveguide core (14) and the second delay section (26) of the second waveguide core (14).

4. The structure of one of claims 1 to 3 wherein the first delay section (24) of the first waveguide core (18) and the second delay section (26) of the second waveguide core (14) have equal lengths.

5. The structure of one of claims 1 to 4 further comprising:
a second optical phase shifter (38) including a second p-n junction in a second portion of the first delay section (24) of the first waveguide core (12).

6. The structure of claim 5 wherein the first delay section (24) of the first waveguide core (12) includes a bend between the first portion of the first delay section (24) of the first waveguide core (12) and the second portion of the first delay section (24) of the first waveguide core (12), or wherein the first delay section (24) of the first waveguide core (12) includes a bend between the first p-n junction and the second p-n junction.

7. The structure of claim 6 wherein the bend is semi-circular.

8. The structure of one of claims 5 to 7 wherein the first p-n junction is spaced along a physical length of the first delay section (24) of the first waveguide core (12) from the second p-n junction.

9. The structure of one of claims 5 to 8 wherein the first delay section (24) of the first waveguide core (12) includes a third portion between the first portion and the second portion, and the third portion of the first delay section (24) of the first waveguide core (12) lacks a p-n junction.

10. The structure of one of claims 1 to 9 wherein the first waveguide core (12) includes a second delay section (32), and further comprising:
a first directional coupler (18) between the first delay section (24) of the first waveguide core (12) and the second delay section (32) of the first waveguide core (12); and optionally further comprising:
a second directional coupler (20), wherein the second delay section (32) of the first waveguide core (12) is disposed between the first directional coupler (18) and the second directional coupler (20).

11. The structure of claim 10 wherein the second delay section (32) of the first waveguide core (12) has a shorter length than the first delay section (24) of the first waveguide core (12).

12. The structure of claim 10 further comprising:
a second optical phase shifter including a second p-n junction in a second portion of the second delay section (32) of the first waveguide core (12).

13. The structure of one of claims 1 to 12 wherein the first waveguide core (12) and the second waveguide core (14) comprise silicon.

14. The structure of one of claims 1 to 9 further comprising:
a first directional coupler (16); and
a second directional coupler (18),
wherein the first delay section (24) of the first waveguide core (12) and the first delay section (30) of the second waveguide core (14) are disposed between the first directional coupler (16) and the second directional coupler (18).

15. A method of forming a structure for a modulator, the method comprising:
forming a first waveguide core (12) including a delay section (24);
forming a second waveguide core (14) including a first delay section (30) and a second delay section (26), wherein the first delay section (30) of the second waveguide core (14) has a shorter length than the delay section (24) of the first waveguide core (12), and wherein the second delay section (26) of the second waveguide core (14) has a longer length than the first delay section (30) of the second waveguide core (14);
forming an optical phase shifter (36) including a p-n junction in a portion of the delay section (24) of the first waveguide core (12); and
forming an optical phase shifter (40, 42) including a p-n junction in a portion of the second delay section (26) of the second waveguide core (14).

## Patentansprüche

1. Struktur für einen Modulator, wobei die Struktur umfasst:
einen ersten Wellenleiterkern (12) umfassend eine erste Verzögerungssektion (24);
einen zweiten Wellenleiterkern (14) umfassend eine erste Verzögerungssektion (30) und eine zweite Verzögerungssektion (26), wobei die erste Verzögerungssektion (30) des zweiten Wellenleiterkerns (14) eine kürzere Länge als die erste Verzögerungssektion (24) des ersten Wellenleiterkerns (12) aufweist, und die zweite Verzögerungssektion (26) des zweiten Wellenleiterkerns (14) eine längere Länge als die erste Verzögerungssektion (30) des zweiten Wellenleiterkerns (14) aufweist;
einen ersten optischen Phasenschieber (36) umfassend einen ersten p-n-Übergang in einem ersten Abschnitt der ersten Verzögerungssektion (24) des ersten Wellenleiterkerns (12); und
einen ersten optischen Phasenschieber (40) umfassend einen ersten p-n-Übergang in einem ersten Abschnitt der zweiten Verzögerungssektion (26) des zweiten Wellenleiterkerns (14).

2. Struktur nach Anspruch 1, ferner umfassend:
einen zweiten optischen Phasenschieber (42) umfassend einen zweiten p-n-Übergang in einem zweiten Abschnitt der zweiten Verzögerungssektion (26) des zweiten Wellenleiterkerns (14).

3. Struktur nach Anspruch 1 oder Anspruch 2, ferner umfassend:
einen Richtkoppler (18) zwischen der ersten Verzögerungssektion (30) des zweiten Wellenleiterkerns (14) und der zweiten Verzögerungssektion (26) des zweiten Wellenleiterkerns (14).

4. Struktur nach einem der Ansprüche 1 bis 3, wobei die erste Verzögerungssektion (24) des ersten Wellenleiterkerns (18) und die zweite Verzögerungssektion (26) des zweiten Wellenleiterkerns (14) gleiche Längen aufweisen.

5. Struktur nach einem der Ansprüche 1 bis 4, ferner umfassend:
einen zweiten optischen Phasenschieber (38) umfassend einen zweiten p-n-Übergang in einem zweiten Abschnitt der ersten Verzögerungssektion (24) des ersten Wellenleiterkerns (12).

6. Struktur nach Anspruch 5, wobei die erste Verzögerungssektion (24) des ersten Wellenleiterkerns (12) eine Biegung zwischen dem ersten Abschnitt der ersten Verzögerungssektion (24) des ersten Wellenleiterkerns (12) und dem zweiten Abschnitt der ersten Verzögerungssektion (24) des ersten Wellenleiterkerns (12) umfasst, oder wobei die erste Verzögerungssektion (24) des ersten Wellenleiterkerns (12) eine Biegung zwischen dem ersten p-n-Übergang und dem zweiten p-n-Übergang umfasst.

7. Struktur nach Anspruch 6, wobei die Biegung halbkreisförmig ist.

8. Struktur nach einem der Ansprüche 5 bis 7, wobei der erste p-n-Übergang entlang einer physikalischen Länge der ersten Verzögerungssektion (24) des ersten Wellenleiterkerns (12) von dem zweiten p-n-Übergang beabstandet ist.

9. Struktur nach einem der Ansprüche 5 bis 8, wobei die erste Verzögerungssektion (24) des ersten Wellenleiterkerns (12) einen dritten Abschnitt zwischen dem ersten Abschnitt und dem zweiten Abschnitt umfasst, und der dritte Abschnitt der ersten Verzögerungssektion (24) des ersten Wellenleiterkerns (12) keinen p-n-Übergang aufweist.

10. Struktur nach einem der Ansprüche 1 bis 9, wobei der erste Wellenleiterkern (12) eine zweite Verzögerungssektion (32) umfasst, und ferner umfassend:
einen ersten Richtkoppler (18) zwischen der ersten Verzögerungssektion (24) des ersten Wellenleiterkerns (12) und der zweiten Verzögerungssektion (32) des ersten Wellenleiterkerns (12); und optional ferner umfassend:
einen zweiten Richtkoppler (20), wobei die zweite Verzögerungssektion (32) des ersten Wellenleiterkerns (12) zwischen dem ersten Richtkoppler (18) und dem zweiten Richtkoppler (20) angeordnet ist.

11. Struktur nach Anspruch 10, wobei die zweite Verzögerungssektion (32) des ersten Wellenleiterkerns (12) eine kürzere Länge als die erste Verzögerungssektion (24) des ersten Wellenleiterkerns (12) aufweist.

12. Struktur nach Anspruch 10, ferner umfassend:
einen zweiten optischen Phasenschieber umfassend einen zweiten p-n-Übergang in einem zweiten Abschnitt der zweiten Verzögerungssektion (32) des ersten Wellenleiterkerns (12).

13. Struktur nach einem der Ansprüche 1 bis 12, wobei der erste Wellenleiterkern (12) und der zweite Wellenleiterkern (14) Silizium umfassen.

14. Struktur nach einem der Ansprüche 1 bis 9, ferner umfassend:
einen ersten Richtkoppler (16); und
einen zweiten Richtkoppler (18),
wobei die erste Verzögerungssektion (24) des ersten Wellenleiterkerns (12) und die erste Verzögerungssektion (30) des zweiten Wellenleiterkerns (14) zwischen dem ersten Richtkoppler (16) und dem zweiten Richtkoppler (18) angeordnet sind.

15. Verfahren zum Bilden einer Struktur für einen Modulator, wobei das Verfahren umfasst:
Bilden eines ersten Wellenleiterkerns (12) umfassend eine Verzögerungssektion (24);
Bilden eines zweiten Wellenleiterkerns (14) umfassend eine erste Verzögerungssektion (30) und eine zweite Verzögerungssektion (26), wobei die erste Verzögerungssektion (30) des zweiten Wellenleiterkerns (14) eine kürzere Länge als die Verzögerungssektion (24) des ersten Wellenleiterkerns (12) aufweist, und wobei die zweite Verzögerungssektion (26) des zweiten Wellenleiterkerns (14) eine längere Länge als die erste Verzögerungssektion (30) des zweiten Wellenleiterkerns (14) aufweist;
Bilden eines optischen Phasenschiebers (36) umfassend einen p-n-Übergang in einem Abschnitt der Verzögerungssektion (24) des ersten Wellenleiterkerns (12); und
Bilden eines optischen Phasenschiebers (40, 42) umfassend einen p-n-Übergang in einem Abschnitt der zweiten Verzögerungssektion (26) des zweiten Wellenleiterkerns (14).

## Revendications

1. Structure pour un modulateur, la structure comprenant :
un premier noyau de guide d'ondes (12) qui inclut une première section de retard (24) ;
un second noyau de guide d'ondes (14) qui inclut une première section de retard (30) et une seconde section de retard (26), la première section de retard (30) du second noyau de guide d'ondes (14) présentant une longueur plus courte que celle de la première section de retard (24) du premier noyau de guide d'ondes (12), et la seconde section de retard (26) du second noyau de guide d'ondes (14) présentant une longueur plus longue que celle de la première section de retard (30) du second noyau de guide d'ondes (14) ;
un premier déphaseur optique (36) qui inclut une première jonction p-n dans une première partie de la première section de retard (24) du premier noyau de guide d'ondes (12) ; et
un premier déphaseur optique (40) qui inclut une première jonction p-n dans une première partie de la seconde section de retard (26) du second noyau de guide d'ondes (14).

2. Structure selon la revendication 1, comprenant en outre :
un second déphaseur optique (42) qui inclut une seconde jonction p-n dans une seconde partie de la seconde section de retard (26) du second noyau de guide d'ondes (14).

3. Structure selon la revendication 1 ou la revendication 2, comprenant en outre :
un coupleur directionnel (18) entre la première section de retard (30) du second noyau de guide d'ondes (14) et la seconde section de retard (26) du second noyau de guide d'ondes (14).

4. Structure selon l'une quelconque des revendications 1 à 3, dans laquelle la première section de retard (24) du premier noyau de guide d'ondes (12) et la seconde section de retard (26) du second noyau de guide d'ondes (14) présentent des longueurs égales.

5. Structure selon l'une quelconque des revendications 1 à 4, comprenant en outre :
un second déphaseur optique (38) qui inclut une seconde jonction p-n dans une deuxième partie de la première section de retard (24) du premier noyau de guide d'ondes (12).

6. Structure selon la revendication 5, dans laquelle la première section de retard (24) du premier noyau de guide d'ondes (12) inclut une flexion entre la première partie de la première section de retard (24) du premier noyau de guide d'ondes (12) et la deuxième partie de la première section de retard (24) du premier noyau de guide d'ondes (12) ou dans laquelle la première section de retard (24) du premier noyau de guide d'ondes (12) inclut une flexion entre la première jonction p-n et la seconde jonction p-n.

7. Structure selon la revendication 6, dans laquelle la flexion est semi-circulaire.

8. Structure selon l'une quelconque des revendications 5 à 7, dans laquelle la première jonction p-n est espacée de la seconde jonction p-n suivant une longueur physique de la première section de retard (24) du premier noyau de guide d'ondes (12).

9. Structure selon l'une quelconque des revendications 5 à 8, dans laquelle la première section de retard (24) du premier noyau de guide d'ondes (12) inclut une troisième partie entre la première partie et la deuxième partie, et la troisième partie de la première section de retard (24) du premier noyau de guide d'ondes (12) est exempte de jonction p-n.

10. Structure selon l'une quelconque des revendications 1 à 9, dans laquelle le premier noyau de guide d'ondes (12) inclut une seconde section de retard (32), et comprenant en outre :
un premier coupleur directionnel (18) entre la première section de retard (24) du premier noyau de guide d'ondes (12) et la seconde section de retard (32) du premier noyau de guide d'ondes (12) ; et en option, comprenant en outre :
un second coupleur directionnel (20), dans laquelle la seconde section de retard (32) du premier noyau de guide d'ondes (12) est disposée entre le premier coupleur directionnel (18) et le second coupleur directionnel (20).

11. Structure selon la revendication 10, dans laquelle la seconde section de retard (32) du premier noyau de guide d'ondes (12) présente une longueur plus courte que celle de la première section de retard (24) du premier noyau de guide d'ondes (12).

12. Structure selon la revendication 10, comprenant en outre :
un second déphaseur optique qui inclut une seconde jonction p-n dans une seconde partie de la seconde section de retard (32) du premier noyau de guide d'ondes (12).

13. Structure selon l'une quelconque des revendications 1 à 12, dans laquelle le premier noyau de guide d'ondes (12) et le second noyau de guide d'ondes (14) comprennent du silicium.

14. Structure selon l'une quelconque des revendications 1 à 9, comprenant en outre :
un premier coupleur directionnel (16) ; et
un second coupleur directionnel (18),
dans laquelle la première section de retard (24) du premier noyau de guide d'ondes (12) et la première section de retard (30) du second noyau de guide d'ondes (14) sont disposées entre le premier coupleur directionnel (16) et le second coupleur directionnel (18).

15. Procédé de formation d'une structure pour un modulateur, le procédé comprenant :
la formation d'un premier noyau de guide d'ondes (12) qui inclut une section de retard (24) ;
la formation d'un second noyau de guide d'ondes (14) qui inclut une première section de retard (30) et une seconde section de retard (26), dans lequel la première section de retard (30) du second noyau de guide d'ondes (14) présente une longueur plus courte que celle de la section de retard (24) du premier noyau de guide d'ondes (12) et dans lequel la seconde section de retard (26) du second noyau de guide d'ondes (14) présente une longueur plus longue que celle de la première section de retard (30) du second noyau de guide d'ondes (14) ;
la formation d'un déphaseur optique (36) qui inclut une jonction p-n dans une partie de la section de retard (24) du premier noyau de guide d'ondes (12) ; et
la formation d'un déphaseur optique (40, 42) qui inclut une jonction p-n dans une partie de la seconde section de retard (26) du second noyau de guide d'ondes (14).
